# EUROPÄISCHE PATENTSCHRIFT

(11) **EP 0 886 449 B1**
(45) Veröffentlichungstag und Bekanntmachung des Hinweises auf die Patenterteilung: **30.07.2003**
(21) Anmeldenummer: 98440131.5
(22) Anmeldetag: 17.06.1998
(51) Int. Cl.: H04Q 3/00, H04M 15/08

(54) **Gebührenfreie Kommunikationsverbindung**
Toll free connections
Appels gratuits

(30) Priorität: 20.06.1997 DE 19726175
(43) Veröffentlichungstag der Anmeldung: 23.12.1998
(73) Patentinhaber: ALCATEL, 75008 Paris (FR)
(72) Erfinder: Lehmacher, Markus, 70435 Stuttgart (DE); Rupp, Stephan, Dr., 74354 Besigheim (DE)
(74) Vertreter: Rausch, Gabriele, Dr.

(56) Entgegenhaltungen:
- US-A- 5 533 107
- US-A- 5 617 448
- MARCHISIO L ET AL: "TMN MANAGEMENT OF PAN-EUROPEAN IN-BASED FREEPHONE" IEEE NETWORK OPERATIONS AND MANAGEMENT SYMPOSIUM (NOMS),US,NEW YORK, IEEE, Bd. SYMP. 5, Seite 4.2.1-4.2.10 XP000633500 ISBN: 0-7803-2518-4

## Beschreibung

Die Erfindung betrifft ein Verfahren zum Aufbau einer gebührenfreien Kommunikationsverbindung zwischen einem rufenden Endgerät und einem gerufenen Endgerät nach dem Oberbegriff von Anspruch 1 sowie eine Diensteinheit und eine Vermittlungsstelle für den Aufbau einer gebührenfreien Kommunikationsverbindung nach dem Oberbegriff von Anspruch 10 bzw. 12 und ein Kommunikationsnetz nach dem Oberbegriff von Anspruch 13.

In manchen Fernsprechnetzen steht ein Dienstmerkmal zur Verfügung, das es dem angerufenen Teilnehmer ermöglicht, die Gesprächskosten eines Anrufes zu übernehmen. Dieses Dienstmerkmal ist in den USA als Service 800 und bei der Deutschen Telecom als Service 130 bekannt. Eine Beschreibung dieses Dienstmerkmals findet sich in dem Artikel "Eigenschaften intelligenter Netze" von L. Alvarez Mazo et al. , Elektrisches Nachrichtenwesen Band 63, Nummer 4, 1989, Seiten 314 bis 319.

Wählt ein Teilnehmer eine gebührenfreie Rufnummern, die beispielsweise in Deutschland mit der Ziffernfolge 130 und in den USA mit der Ziffernfolge 800 beginnt, so wird die Verbindungsanforderung zu einer Steuereinheit des jeweiligen Kommunikationsnetzes geleitet. Diese Steuereinheit wertet die gerufene Rufnummer in eine "normale" Rufnummer um, die die eigentliche Rufnummer des gerufenen Teilnehmers darstellt. Weiter steuert sie die Vergebührung derart, daß die für die Verbindung anfallenden Gebühren dem gerufenen Teilnehmer belastet werden. Die Steuereinheit ist hierbei mittels einer IN Architektur (IN = Intelligent Network) realisiert.

Diese Lösung hat den Nachteil, daß eine gebührenfreie Rufnummer nur lokal in einem einzigen Kommunikationsnetz zur Verfügung steht. Es ist somit nicht möglich, eine globale gebührenfreie Rufnummer zu bilden, die in mehreren nationalen Fernsprechnetzen Gültigkeit hat, also beispielsweise sowohl in den USA als auch in Deutschland verwendet werden kann.

In der Empfehlung E.152 "International Freephone Service" der ITU-T, 07/96 sind weitere Möglichkeiten beschrieben, wie obiges Dienstmerkmal auch für Verbindung zwischen Teilnehmern verschiedener nationaler Fernsprechnetze bereitgestellt werden kann. Eine Möglichkeit besteht darin, daß die Steuereinheit im Netz des rufenden Teilnehmers angesiedelt ist und eine lokale gebührenfreie Rufnummer dieses Netzes in die internationale Rufnummer des gerufenen Teilnehmers umgewertet wird. Eine andere Möglichkeit besteht darin, daß es in einem Netz ermöglicht wird, auch von außerhalb dieses Netzes eine lokale gebührenfrei Rufnummer anzuwählen. Diese beiden Möglichkeiten haben jedoch ebenfalls den bereits oben angeführten Nachteil.

Die Erfindung geht nun von einer weiteren in dieser Empfehlung beschriebenen Möglichkeit aus. Diese Möglichkeit ist detaillierter auch in der Empfehlung E.169 "Numbering Plan for Universal International Freephone Service" , 02/96, der ITU-T beschrieben. Sie besteht darin, daß eine globale internationale gebührenfrei Rufnummer (universal international freephone number) im internationalen Nummerierungsbereich vorgesehen wird. Eine solche Rufnummer besteht aus einer Dienstekennung für einen globalen Service (Ziffernfolge 00-800) und aus einer globalen Teilnehmernummer.

Durch diese Lösung ist es möglich, eine globale gebührenfreie Rufnummer zu bilden, die in allen nationalen Fernsprechnetzen verwendet werden kann. Es besteht jedoch der Nachteil, daß die Vergabe und die Verwaltung solcher Rufnummern weltweit zentral erfolgen muß und der zur Verfügung stehende Rufnummernvorrat beschränkt ist, weshalb auch hohe Anforderungen für den Erhalt einer solchen Nummer gesetzt sind.

Aus dem Dokument "TMN Management of PAN-European IN-based Freephone", Marchisio L et al, IEEE Network Operations and Management Symposium (NOMS), New York, ISBN 0-7803-2518-4, Seite 4.2.1-4.2.10 ist ein Verfahren nach dem Oberbegriff des Anspruchs 1 bekannt.

Der Erfindung liegt die Aufgabe zugrunde die Verwendung von globalen gebührenfreien Rufnummern zu ermöglichen, die nicht weltweit zentral vergeben und verwaltet werden müssen.

Diese Aufgabe wird gelöst durch ein Verfahren zum Aufbau einer gebührenfreien Kommunikationsverbindung zwischen einem rufenden Endgerät und einem gerufenen Endgerät nach der Lehre von Anspruch 1 sowie durch eine Diensteinheit, eine Vermittlungsstelle und ein Kommunikationsnetz nach der Lehre von Anspruch 10, 12 bzw. 13.

Der Erfindung liegt hierbei der Gedanke zugrunde, eine "virtuelle" globale gebührenfreie Rufnummer, die von einem lokalen, beispielsweise von einem nationalen, Netzbetreiber oder Dienstbetreiber vergeben und verwaltet wird, bereitzustellen und diese globale gebührenfreie Rufnummer mittels eines Dienstknotens dieses Netzbetreibers bzw. Dienstbetreibers jeweils auf eine lokal gültige gebührenfreie Rufnummer desjenigen Kommunikationsnetzes abzubilden, mit dem der rufenden Teilnehmer gerade verbunden ist. Es erfolgt somit eine zweifache Umwertung einer derartigen globalen gebührenfreien Rufnummer: Die globale gebührenfreie Rufnummer wird zuerst auf eine jeweilige lokale gebührenfreie Rufnummer und sodann auf die Zielrufnummer umgewertet.

Eine gebührenfreie Verbindung und eine gebührenfreie Rufnummer (freephone number) ist im Sinne der Erfindung hierbei so zu verstehen, daß der angerufene Teilnehmer die gesamten oder zumindest einen Teil der für eine solche Verbindung anfallenden Gebühren übernimmt.

Ein Vorteil der Erfindung ist, daß jeder Netzbetreiber oder Dienstbetreiber eines Kommunikationsnetzes global gültige gebührenfreie Rufnummern als zusätzlichen Dienst anbieten kann. Dadurch erweitert sich der Rufnummernvorrat, die Verwaltung und Vergabe solcher Nummern wird dezentralisiert und somit flexibilisiert.

Die Erfindung kann mit geringem Aufwand in heute existierende Mobilfunknetze integriert werden, wenn die Anwahl einer "virtuelle" gebührenfreie Rufnummer mittels des Teilnehmerprofils erkannt wird. Die Erfindung ist jedoch selbstverständlich auch in alle sonstigen Kommunikationsnetze, insbesondere Fernsprechnetze, integrierbar.

Weitere Vorteile ergeben sich insbesondere, wenn eine Kennung des rufenden Teilnehmers oder Endgeräts bei der Umwertung der globalen in die lokale gebührenfrei Rufnummer mitberücksichtig wird. Hierdurch kann eine globale gebührenfreie Rufnummer mehrfach für unterschiedliche Teilnehmergruppen belegt werden.

Im Folgenden wird die Erfindung anhand zweier Ausführungsbeispiele unter Zuhilfenahme beiliegender Zeichnungen beispielhaft erläutert.
- Fig. 1: zeigt ein Blockschaltbild eines Kommunikationssystems mit zwei Kommunikationsnetzen.
- Fig. 2: zeigt ein detaillierteres Blockschaltbild der Kommunikationsnetze nach Fig. 1.
- Fig. 3: zeigt ein Blockschaltbild einer erfindungsgemäßen Diensteinheit.

Im ersten Ausführungsbeispiel wird die Durchführung des erfindungsgemäßen Verfahrens und der Aufbau einer erfindungsgemäßen Diensteinheit, einer erfindungsgemäßen Vermittlungsstelle und eines erfindungsgemäßen Kommunikationsnetzes für den Fall beschrieben, daß der rufende Teilnehmer ein mobiler Teilnehmer ist.

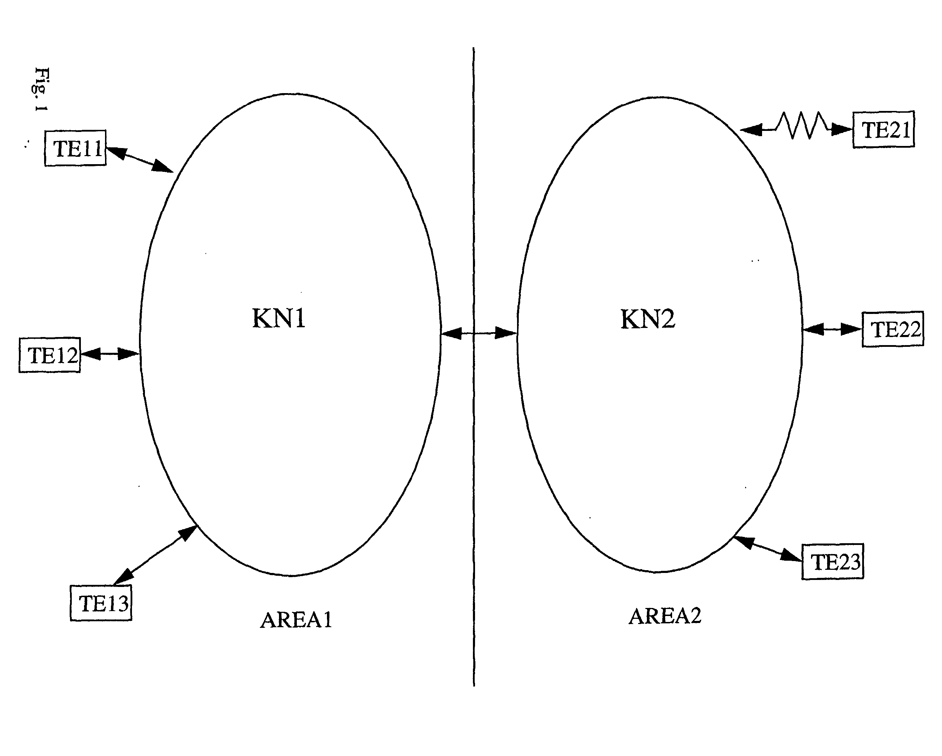

Fig. 1 zeigt zwei miteinander verbundene Kommunikationsnetze KN1 und KN2 und mehrere diesen zugeordneten Endgeräte TE11 bis TE13 bzw. TE21 bis TE23.

Die Kommunikationsnetze KN1 und KN2 stellen jeweils ein nationales Fernsprechnetz dar, das über einen eigenständigen Nummerierungsbereich AREA1 bzw. AREA2 verfügt. Gemäß diesem Nummerierungsbereich werden die Teilnehmer im jeweiligen Kommunikationsnetz adressiert. Um eine Verbindung von einem Teilnehmer des Kommunikationsnetzes KN1 zu einem Teilnehmer des Kommunikationsnetzes KN2 aufzubauen, ist eine Ausscheidekennung, dann die Landeskennung des Kommunikationsnetzes KN2 und sodann die Teilnehmerrufnummer des gerufenen Teilnehmers gemäß dem Nummerierungsbereich AREA2 des Kommunikationsnetzes KN2 zu wählen.

Die Kommunikationsnetze KN1 und KN2 sind jeweils aus mehreren miteinander verbunden Teilnehmervermittlungsstellen, Transitvermittlungsstellen und Mobilfunkvermittlungsstellen aufgebaut. Die Endgeräte TE11 bis TE23 der Teilnehmer der Kommunikationsnetze KN1 und KN2 sind über Teilnehmervermittlungsstellen oder, wenn es sich um Mobilfunkendgeräte handelt, über Mobilfunkvermittlungsstellen mit den Kommunikationsnetze KN1 und KN2 verbunden. Bei dem Endgerät TE21 handelt es sich um solch ein Mobilfunkendgerät.

Die Kommunikationsnetze KN1 und KN2 sind jeweils in verschiedene Unternetze aufgeteilt, die verschiedenen Netzbetreibern zugeordnet sind. Die Kommunikationsnetze KN1 und KN2 können somit jeweils aus Fernnetzen, Teilnehmeranschlußnetzen und Mobilfunknetzen verschiedener Netzbetreibern gebildet sein. Ebenso können die in den Kommunikationsnetze KN1 und KN2 bereitgestellten Dienste von separaten Dienstbetreibern bereitgestellt werden.

Es ist natürlich auch möglich, daß sämtliche Telekommunikationsdienstleistungen der Kommunikationsnetze KN1 und KN2 jeweils nur von einem einzigen Netzbetreiber bereitgestellt werden.

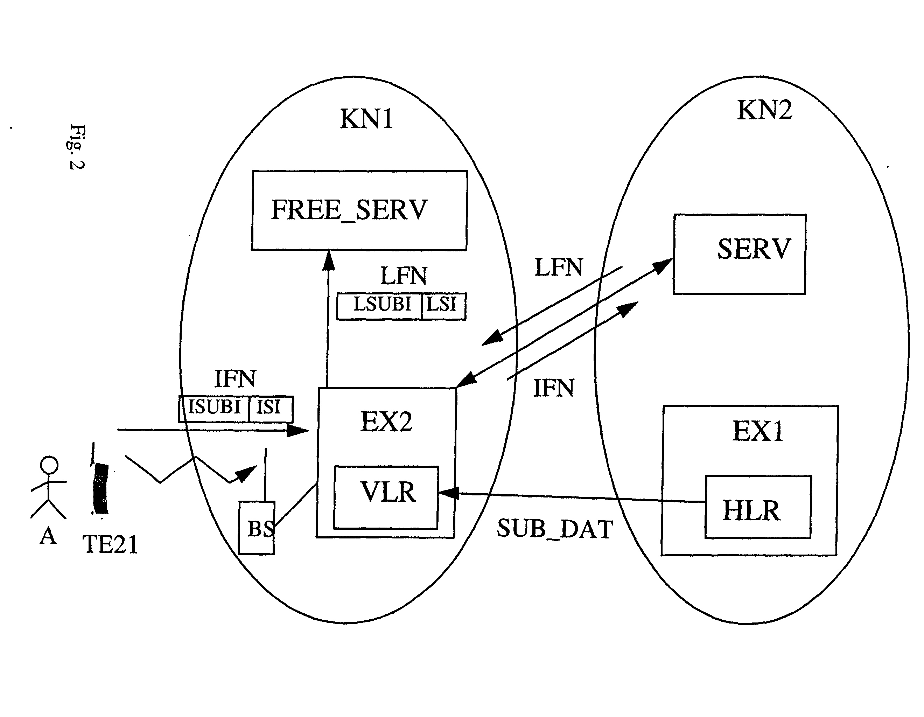

Der detailliertere Aufbau der Kommunikationsnetze KN1 und KN2 wird nun anhand von Fig. 2 erläutert.

Fig. 2 zeigt die Kommunikationsnetze KN1 und KN2 und das Endgerät TE21, das einem Teilnehmer A zugeordnet ist. Das Endgerät TE21 steht mit dem Kommunikationsnetz KN1 über eine Funkschnittstelle in Verbindung und die Kommunikationsnetze KN1 und KN2 tauschen miteinander Daten aus.

Von den Vermittlungsstellen des Kommunikationsnetzes KN1 ist beispielhaft eine Mobilfunkvermittlungsstelle EX2 mit einer Basisstation BS gezeigt, die die Funkschnittstelle zum Endgerät TE21 bereitstellt. Das Kommunikationsnetz KN1 weist darüberhinaus noch eine Diensteinheit FREE_SERV auf. Von den Vermittlungsstellen des Kommunikationsnetzes KN2 ist beispielhaft eine Mobilfunkvermittlungsstelle EX1 gezeigt. Das Kommunikationsnetz KN2 weist darüberhinaus noch eine Diensteinheit SERV auf.

Die Diensteinheit FREE_SERV stellt im Kommunikationsnetz KN1 einen Dienst bereit, der den Aufbau von gebührenfreien Verbindungen ermöglicht (freephone service, freephone system). Rufnummern des Nummerierungsbereiches AREA1 des Kommunikationsnetzes KN1, die mit einer bestimmten Ziffernfolge, einer Dienstekennung LSI, beginnen, werden durch das Kommunikationsnetz KN1 zur Diensteinheit FREE_SERV geleitet. Die Dienstekennung LSI besteht beispielsweise aus der Ziffernfolge 0800. Anhand der nachfolgenden Ziffernfolge, einer Teilnehmerkennung LSUBI, wird der Ziel-Teilnehmer durch die Diensteinheit FREE_SERV bestimmt und die Vergebührung für diese Verbindung so gesteuert, daß die Gebühren ganz oder teilweise von dem angerufenen Teilnehmer übernommen werden. Rufnummern des Nummerierungsbereiches AREA1 des Kommunikationsnetzes KN1, die mit der Dienstekennung LSI beginnen und die von der Diensteinheit FREE_SERV entsprechend dem obigen Verfahren bearbeitet werden, stellen eine lokale gebührenfreie Rufnummern LFN des Kommunikationsnetzes KN1 dar.

Die Diensteinheit FREE_SERV besteht aus einem Dienststeuerknoten (service control point) gemäß der IN-Architektur (IN = Intelligent Network). Der genaue Aufbau, die Funktionsweise und die Einbindung der Diensteinheit FREE_SERV in das Kommunikationsnetz KN1 kann beispielsweise dem Artikel "Eigenschaften intelligenter Netze" von L. Alvarez Mazo et al., Elektrisches Nachrichtenwesen Band 63, Nummer 4, 1989, Seiten 314 bis 319 entnommen werden.

Es ist jedoch auch möglich, daß die Diensteinheit FREE_SERV in die Steuerung einer Vermittlungsstelle, beispielsweise eine Transitvermittlungsstelle integriert ist, die damit obige Funktionsweise als Leistungsmerkmal bereitstellt.

Die Diensteinheit SERV besteht ebenso wie die Diensteinheit FREE_SERV aus einem Dienststeuerknoten (service control point) gemäß der IN- Architektur. Dieser Dienststeuerknoten wertet eine an ihn gesendete Rufnummer, die eine von ihm bereitgestellte globale gebührenfrei Rufnummer IFN darstellt, in eine lokale gebührenfreie Rufnummer LFN des Kommunikationsnetzes KN1 um.

Das Endgerät TE21 ist ein übliches Mobilfunkendgerät, beispielsweise nach dem GSM, IS54, IS95 oder SMPS-D Standard. Es ist dem Teilnehmer A zugeordnet und wird somit durch die Teilnehmerkennung von A in den Kommunikationsnetzen KN1 und KN2 adressiert.

Die Mobilfunkvermittlungsstellen EX1 und EX2 sind wie übliche Mobilfunkvermittlungsstellen aufgebaut, beispielsweise nach einem der oben angeführten Standards. Sie sind somit jeweils mit einer Heimatdatenbank (home location register), mit einer Besuchsdatenbank (vistor location register) und mit mehreren Basisstationen verbunden.

Die Basisstationen, beispielsweise die Basisstation BS, stellen die Funkschnittstellen in den jeweiligen, der Mobilfunkvermittlungsstelle zugeordneten Funkbedeckungsbereichen bereit.

Jeder Mobilfunkteilnehmer ist einer Mobilfunkvermittlungsstelle zugeordnet, die seine Heimat-Mobilfunkvermittlungsstelle darstellt. In deren Heimatdatenbank sind seine sämtlichen Teilnehmerdaten und darüberhinaus Wegeleit-Daten abgespeichert, die darauf verweisen, wo er sich im Augenblick aufhält. In der Besuchsdatenbank sind Teilnehmerdaten und Wegeleit-Daten derjenigen Teilnehmer gespeichert, die sich in einem der jeweiligen Mobilfunkvermittlungsstelle zugeordneten Funkbedeckungsbereiche aufhalten und für die diese Mobilfunkvermittlungsstelle nicht die Heimat-Mobilfunkvermittlungsstelle darstellt.

Von den Besucher- und Heimatdatenbanken der Mobilfunkvermittlungsstellen EX1 und EX2 sind die Heimatdatenbank HLR der Mobilfunkvermittlungsstellen EX1 und die Besuchsdatenbank VLR der Mobilfunkvermittlungsstellen EX2 beispielhaft gezeigt.

Die Mobilfunkvermittlungsstelle EX1 ist die Heimat-Mobilfunkvermittlungsstelle des Teilnehmers A und die Mobilfunkvermittlungsstelle EX2 ist diejenige Mobilfunkvermittlungsstelle, in einer deren Funkbedeckungsbereiche sich der Teilnehmer A mit seinem Endgerät TE21 gerade aufhält. Sämtliche Teilnehmerdaten des Teilnehmers A sind somit in der Heimatdatenbank HLR gespeichert. Wenn der Teilnehmer A sich in den Bedeckungsbereich der Mobilfunkvermittlungsstelle EX2 bewegt und sein Mobilfunkendgerät TE21 hierbei zum ersten Mal mit der Mobilfunkvermittlungsstelle EX2 in Verbindung tritt, erkennt diese, daß sie nicht die Heimat-Mobilfunkvermittlungsstelle des Teilnehmers A darstellt und daß die Mobilfunkvermittlungsstelle EX1 diese Rolle einnimmt. Sie baut daraufhin eine Verbindung mit der Mobilfunkvermittlungsstelle EX1 auf, über die ein Teil der Teilnehmerdaten des Teilnehmers A von der Heimatdatenbank HLR in die Besuchsdatenbank VLR der Mobilfunkvermittlungsstelle EX2 geladen wird. Die übermittelten Teilnehmerdaten enthalten auch das Teilnehmerprofil SUB_DAT des Teilnehmers A. Im Teilnehmerprofil ist u. a. abgespeichert, welchen vom Teilnehmer A gewählten Rufnummern für den Teilnehmer A mit bestimmten Diensten belegt sind.

Globale gebührenfreie Rufnummern IFN bestehen aus einer Dienstekennung ISI und einer Teilnehmerkennung ISUBI. Diejenigen globalen gebührenfreien Rufnummern IFN, die für den Teilnehmer A Gültigkeit haben sollen, werden im Teilnehmerprofil SUB_DAT des Teilnehmers A in der Heimatdatenbank HLR verknüpft mit demjenigen IN Dienst abgespeichert, der von der Diensteinheit SERV bereitgestellt wird. Diese Verknüpfung erfolgt vorteilhafterweise dadurch, daß nicht alle solche Rufnummern sondern nur die solche Rufnummern kennzeichnende erste Ziffernfolge, die Dienstekennung ISI, mit dem Dienst der Diensteinheit SERV verknüpft im Teilnehmerprofil SUB_DAT abgespeichert wird. Die Dienstekennung ISI besteht hierbei beispielsweise aus der Ziffernfolge 0130.

Es ist auch möglich, daß unabhängig von der vom Teilnehmer A gewählten Rufnummer eine Anfrage an die Diensteinheit SERV gesendet wird. Die Verknüpfung einer globalen gebührenfreien Rufnummer mit dem Dienst der Diensteinheit SERV und somit die Erkennung der globalen gebührenfreien Rufnummer erfolgt sodann in der Diensteinheit SERV selbst. Im Teilnehmerprofil SUB_DAT wird in diesem Fall nur eine Kennung des Dienstes und eventuell die Adresse der Diensteinheit SERV abgespeichert.

Für einen vom Teilnehmer A veranlaßten Verbindungsaufbau zu einem Teilnehmer mit einer gebührenfreien globalen Rufnummer ergibt sich so folgender Ablauf:

Bewegt sich der Teilnehmer A mit seinem Endgerät TE21 in den Bereich eines anderen Kommunikationsnetzes, hier des Kommunikationsnetzes KN1, so wird das Teilnehmerprofil SUB_DAT und damit die oben angeführte Verknüpfung von der Heimatdatenbank HLR in die Besuchsdatenbank einer Vermittlungsstelle dieses Kommunikationsneztes, hier in die Besuchsdatenbank VLR, geladen.

Wählt der Teilnehmer A eine globale gebührenfreie Nummer IFN, so sendet sein Endgerät TE21 eine Verbindungsanforderung mit der Nummer IFN als gerufene Rufnummer über die Basisstation BS an die Mobilfunkvermittlungsstelle EX2. Die Steuerung der Vermittlungsstelle EX2 überprüft das dem Teilnehmer A zugeordnete, in der Besuchsdatenbank VLR abgespeicherte Teilnehmerprofil SUB_DAT. Dadurch erkennt die Steuerung, daß die diese Rufnummer einleitende Ziffernfolge die Dienstekennung ISI ist, die mit dem von der Diensteinheit SERV erbrachten IN Dienst verknüpft ist. Gemäß der Verknüpfung richtet sie sodann eine Anfrage an die Diensteinheit SERV.

Die Anfrage an die Diensteinheit SERV wird über das Nr. 7 Signalisierungssystem übertragen. Die Diensteinheit SERV und die Vermittlungsstelle EX1 kommunizieren hierbei mittels des INAP Protokolls (INAP = Intelligent Network Application Protocol) miteinander. Es ist jedoch auch möglich, daß ein anderes Übertragungsnetz für diese Kommunikation verwendet wird, beispielsweise ein ATM (Asynchronous Transfer Mode) oder ein LAN (Local Area Network) Netz.

Die Diensteinheit SERV ermittelt zu der globalen gebührenfreien Rufnummer IFN eine lokale gebührenfreie Rufnummer LFN und sendet diese Rufnummer als Rückantwort an die Vermittlungsstelle EX1 zurück. Gesteuert durch die Diensteinheit SERV ersetzt die Vermittlungsstelle EX1 sodann die in der Verbindungsanforderung enthaltene globale gebührenfreie Rufnummer IFN durch die von der Diensteinheit SERV ermittelte lokale gebührenfreie Rufnummer LFN und vermittelt sodann die Verbindungsanforderung gemäß dieser neuen gerufenen Rufnummer weiter.

Gemäß der Dienstekennung LSI wird die Verbindungsanforderung sodann durch das Kommunikationsnetz KN1 zu der Diensteinheit FREE_SERV vermittelt, die eine weitere Umwertung der Rufnummer vornimmt und die Vergebührung der aufgrund dieser Verbindungsanforderung aufgebauten Verbindung durchführt.

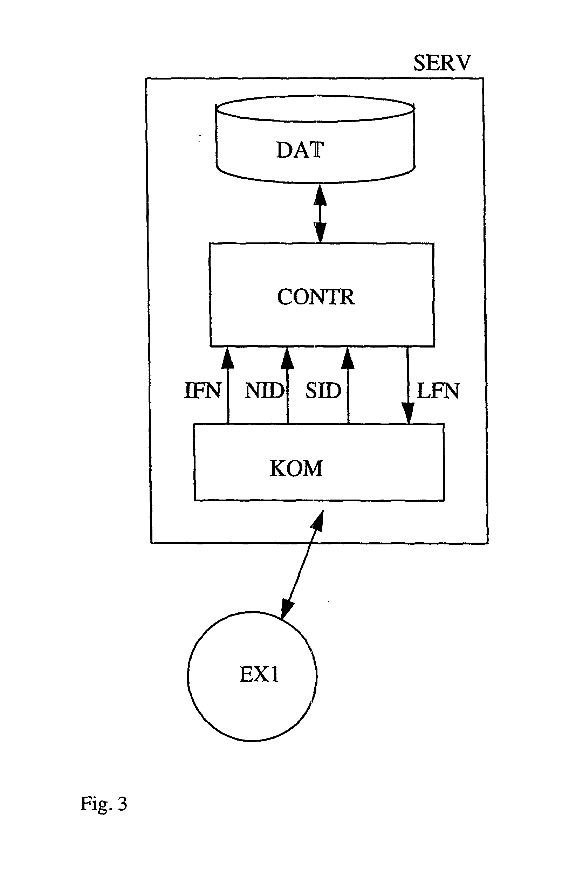

Im Folgenden wird die Funktionsweise der Diensteinheit SERV anhand von Fig. 3 detaillierter beschrieben.

Fig. 3 zeigt die Diensteinheit SERV und die Vermittlungsstelle EX1, die miteinander kommunizieren. Die Diensteinheit SERV weist eine Datenbank DAT, eine Steuereinheit CONTR und eine Kommunikationseinheit KOM auf.

Die Kommunikationseinheit KOM führt die Kommunikation mit der Vermittlungsstelle EX1 durch und tauscht hierbei Daten und Steuerbefehle mit der Vermittlungsstelle EX1 aus. An die Steuereinheit CONTR reicht sie bei einer Anfrage von einer Vermittlungsstelle die in dieser Anfrage enthaltene globale gebührenfreie Rufnummer IFN, eine Netzkennung NID und eine Teilnehmerkennung SID weiter, die den rufenden Teilnehmer, hier den Teilnehmer A, beschreibt. Die Netzkennung NID kennzeichnet dasjenig Kommunikationsnetz, hier das Kommunikationsnetz KN1, aus dem die Anfrage gesendet wird. Im Gegenzug steuert sie das Eintragen der ihr von der Steuereinheit CONTR übermittelten lokalen gebührenfreien Rufnummer LFN durch die anfragende Vermittlungsstelle in die wartende Verbindungsanforderung.

Die Steuereinheit CONTR ermittelt durch Zugriff auf die Datenbank DAT aus der globalen gebührenfreien Rufnummer IFN in Abhängigkeit von der Netzkennung NID und der Teilnehmerkennung SID die lokale gebührenfreie Rufnummer LFN.

In der Datenbank DAT sind Verknüpfungen zwischen einer Vielzahl von globalen gebührenfreien Rufnummer IFN und lokalen gebührenfreien Rufnummern LFN abgespeichert. Weiter ist abgespeichert, ob eine globale gebührenfreie Rufnummer gültig ist oder nicht, d. h. ob eine mit der Dienstekennung ISI beginnende Rufnummer als globale gebührenfreie Rufnummer an einen Teilnehmer vergeben ist. Jeder gültigen globalen gebührenfreien Rufnummer IFN ist hierbei mindestens eine lokale gebührenfreie Rufnummer zugeordnet.

Vorteilhafter Weise weist die Datenbank DAT folgende Datenstruktur auf:

In Abhängigkeit von der Teilnehmerkennung ISUBI einer globalen gebührenfreien Rufnummer IFN wird darauf verwiesen, ob es sich um eine gültige oder um eine noch nicht vergebene globale gebührenfreie Rufnummer handelt. Ist die Rufnummer gültig, so wird in Abhängigkeit von der Netzkennung NID und der Teilnehmerkennung SID auf eine lokale gebührenfreie Rufnummer LFN aus einem Satz von dieser globalen gebührenfreien Rufnummer IFN zugeordneten lokalen gebührenfreien Rufnummern LFN verwiesen.

Für die Bereitstellung einer globalen gebührenfreien Rufnummer IFN durch die Diensteinheit SERV sind folgende Schritte durchzuführen:
- Eine Verknüpfung der Rufnummer IFN mit dem von der Diensteinheit SERV angebotenen Dienst ist in die Teilnehmerprofile derjenigen Teilnehmer einzutragen, denen die Verwendung der Rufnummer IFN ermöglicht werden soll.
- In denjenigen Kommunikationsnetzen, in denen die Rufnummer IFN zur Verfügung stehen soll, sind lokale gebührenfreie Rufnummern LFN und zugehörige Dienste einzurichten, die die Vergebührung und das Umwerten auf eine Teilnehmerrufnummer im jeweiligen Kommunikationsnetz steuern. Diese lokalen gebührenfreien Rufnummern LFN werden weiter in Abhängigkeit von der jeweiligen Netzkennung NID zur Rufnummer IFN in der Datenbank DAT eingetragen.
- In einem oder in mehreren Kommunikationsnetzen können für die Rufnummer IFN auch zwei oder mehr lokale gebührenfrei Rufnummern LFN eingerichtet werden. Diese würden dann in Abhängigkeit von der Teilnehmerkennung SID zur Rufnummer IFN in der Datenbank DAT eingetragen. Damit würden in Abhängigkeit vom Teilnehmer oder von Teilnehmergruppen verschiedene lokale gebührenfreie Dienste unter ein und der selben globalen gebührenfreien Rufnummer IFN zur Verfügung stehen.

Auf das Einbeziehen der Teilnehmerkennung SID in die Ermittlung der Rufnummer LFN kann natürlich auch verzichtet werden. Weiter ist es auch möglich, die Zuordnung einer lokalen gebührenfreien Rufnummer LFN in Abhängigkeit von anderen oder weiteren Parametern zu steuern.

Es ist auch möglich, die gerufene Rufnummer einer Verbindungsanforderung in der Vermittlungsstelle EX1 auf andere Weise als durch Verwendung des Teilnehmerprofils SUB_DAT als globale gebührenfreie Rufnummer IFN zu identifizieren. Eine Liste von globalen gebührenfreien Rufnummern IFN oder ihrer Dienstekennungen ISI kann beispielsweise in Mobilfunkvermittlungsstellen des Kommunikationsnetzes KN1 zur Verfügung stehen. Diese Liste würde dann bei jeder ankommenden Verbindungsanforderung zur Überprüfung der gerufenen Rufnummer verwendet werden. Wenn dadurch eine gerufenen Rufnummer als globale gebührenfreie Rufnummer erkannt wird, so wird im folgenden, wie oben beschrieben mit einer Anfrage an die dieser globalen gebührenfreien Rufnummer zugeordneten Diensteinheit fortgefahren. Diese Verfahrensweise kann hierbei auch unter Einschaltung eines IN-Dienstes des Kommunikationsnetzes KN1 durchgeführt werden, d. h. die Erkennung einer globalen gebührenfreien Rufnummer würde nicht mehr oder nunmehr zum Teil von der Vermittlungsstelle EX2 durchgeführt.

Weiter ist es auch möglich, daß die Kommunikationsnetze KN1 und KN2 nicht zwei verschiedene nationale Fernsprechnetze, sondern ganz allgemein Kommunikationsnetze verschiedener Netzbetreiber darstellen.

Beispielsweise sind die Kommunikationsnetze KN1 und KN2 die Netze zweier verschiedener Mobilfunknetzbetreiber.

Im zweiten Ausführungsbeispiel wird die Durchführung des erfindungsgemäßen Verfahrens und der Aufbau einer erfindungsgemäßen Diensteinheit, einer erfindungsgemäßen Vermittlungsstelle und eines erfindungsgemäßen Kommunikationsnetzes für den Fall beschrieben, daß der rufende Teilnehmer ein Festnetz-Teilnehmer ist.

Die Kommunikationsumgebung ist wie nach den Fig. 1, 2 und 3 aufgebaut, mit dem Unterschied, daß die Vermittlungsstellen EX1 und EX2 normale Teilnehmervermittlungsstellen sind, das Endgerät TE21 durch das Endgerät TE12 ersetzt und einem Teilnehmer des Kommunikationsnetzes KN1 zugeordnet ist.

Eine globalen gebührenfreien Rufnummern IFN wird, wie oben beschrieben, mittels einer Liste von globalen gebührenfreien Rufnummern IFN oder ihrer Dienstekennungen SID in der Vermittlungsstelle EX1 erkannt. Auch hier kann diese Erkennung unter Einschaltung eines IN-Dienstes erfolgen. Ansonsten läuft das Verbindungsaufbauverfahren wie oben beschrieben ab.

Eine weitere Möglichkeit der Erkennung einer Verbindungsanforderung mit einer globalen gebührenfreien Rufnummer eröffnet sich, wenn in den Festnetzen eine teilnehmerbezogene Leitweglenkung durchgeführt wird, wie dies beispielsweise in dem UPT Konzept (UPT = Universal Personal Telecommunication) vorgeschlagen wird. Bei solch einer Leitweglenkung stehen Teilnehmerprofile bereit, die in das Besuchsnetz geladen werden, wenn der Teilnehmer sich an einem Festnetz oder auch Mobilfunkendgerät des Besuchsnetzes anmeldet. Diese Teilnehmerprofile können analog zu der oben für mobile Teilnehmer beschriebenen Vorgehensweise in vorteilhafter Weise für das Erkennen einer globalen gebührenfreien Rufnummer verwendet werden.

Entsprechendes gilt natürlich auch, wenn im Kommunikationsnetz KN1 nicht teilnehmerbezogene, sondern endgerätebezogene Profile zur Verfügung stehen. Durch Eintragung einer Verknüpfung zwischen speziellen von dem zugehörigen Endgerät empfangenen gerufenen Rufnummer mit einem Dienst kann auch hier analog zu dem oben zu Fig. 2 und Fig. 3 Beschriebenen eine globale gebührenfreie Rufnummer erkannt werden.

Die oben beschriebenen Ausführungsbeispiele der Erfindung sind natürlich auch auf Kommunikationsnetze übertragbar, die der gemischten Sprach-, Daten- und/oder Videovermittlung sowie der Übertragung dieser Daten dienen. Da in solchen Netzen häufig endgeräte- oder teilnehmerbezogene Profile bereitstehen, ist auch hier die Verwendung dieser Profile für die Erkennung von gebührenfreien globalen Rufnummern besonders vorteilhaft. In diesem Zusammenhang ist unter Rufnummer nicht lediglich eine bestimmte Zahlenfolge zur Adressierung eines gerufenen Teilnehmers zu verstehen, sondern ganz allgemein eine Zahlen und/oder Buchstabenkombination zur Adressierung diese Teilnehmers.

## Patentansprüche

1. Verfahren zum Aufbau einer gebührenfreien Kommunikationsverbindung zwischen einem rufenden Endgerät (TE21), das mit einem ersten Kommunikationsnetz (KN1) in Verbindung steht, und einem gerufenen Endgerät, wobei bei dem Verfahren das rufende Endgerät (TE21) zum Aufbau der Verbindung eine Verbindungsanforderung mit einer globalen gebührenfreien Rufnummer (IFN) als gerufene Rufnummer an das erste Kommunikationsnetz (KN1) sendet,
wobei die globale gebührenfreie Rufnummer (IFN) mittels einer Diensteinheit (SERV) eines zweiten Kommunikationsnetzes (KN2) bereitgestellt wird, **dadurch gekennzeichnet, daß** die Verbindungsanforderung als eine Verbindungsanforderung mit globaler gebührenfreier gerufener Rufnummer erkannt wird und eine Anfrage vom ersten Kommunikationsnetz (KN1) an diese Diensteinheit (SERV) des zweiten Kommunikationsnetzes (KN2) gesendet wird, daß die Diensteinheit (SERV) aus der globalen gebührenfreien Rufnummer (IFN) eine lokale gebührenfreie Rufnummer (LFN) des ersten Kommunikationsnetzes (KN1) ermittelt und diese an das erste Kommunikationsnetzes (KN1) zurückmeldet und daß die angeforderte Verbindung gemäß dieser ermittelten lokalen gebührenfreien Rufnummer (LFN) durch das erste Kommunikationsnetz (KN1) aufgebaut wird.

2. Verfahren nach Anspruch 1, **dadurch gekennzeichnet, daß** die ermittelte lokale gebührenfreie Rufnummer (LFN) in die Verbindungsanforderung als gerufene Rufnummer eingetragen wird und die Verbindungsanforderung gemäß dieser Rufnummer zu einer für die Steuerung von gebührenfreien Verbindungen zuständigen Steuereinheit (FREE_SERV) des ersten Kommunikationsnetzes (KN1) geleitet wird.

3. Verfahren nach einem der Ansprüche 1 bis 2, **dadurch gekennzeichnet, daß** mit der Anfrage eine Kennung (NID) des anfragenden Kommunikationsnetzes an die Diensteinheit (SERV) gesendet wird und daß die Diensteinheit (SERV) aus der globalen gebührenfreien Rufnummer (IFN) die lokale gebührenfreie Rufnummer (LFN) in Abhängigkeit von der Kennung (NID) des anfragenden Kommunikationsnetzes ermittelt.

4. Verfahren nach einem der Ansprüche 1 bis 3, **dadurch gekennzeichnet, , daß** mit der Anfrage eine Kennung (SID) des rufenden Endgerätes oder des dem rufenden Endgerät zugeordneten Teilnehmers (A) vom ersten Kommunikationsnetz (KN1) an die Diensteinheit (SERV) gesendet wird und daß die Diensteinheit (SERV) aus der globalen gebührenfreien Rufnummer (IFN) die lokale gebührenfreie Rufnummer (LFN) in Abhängigkeit von der Kennung (SID) des rufenden Endgerätes bzw. des dem rufenden Endgerät zugeordneten Teilnehmers (A) ermittelt.

5. Verfahren nach einem der Ansprüche 1 bis 4, **dadurch gekennzeichnet, daß** die globale gebührenfrei Rufnummer (IFN) im ersten Kommunikationsnetz (KN1) mittels eines dem rufenden Endgerät oder dessen Teilnehmer (A) zugeordneten Profils (SUB_DAT) erkannt wird.

6. Verfahren nach Anspruch 5, **dadurch gekennzeichnet, daß** das Profil (SUB_DAT) vom zweiten Kommunikationsnetz (KN2) in das erste Kommunikationsnetz (KN1) geladen wird.

7. Verfahren nach Anspruch 6, **dadurch gekennzeichnet, daß** das Laden des Profils (SUB_DAT) erfolgt, wenn das rufende Endgerät (TE21) zur Anmeldung im ersten Kommunikationsnetz (KN1) mit diesem in Verbindung tritt.

8. Verfahren nach einem der Ansprüche 5 bis 7, **dadurch gekennzeichnet, daß** im Profil (SUB_DAT) eine Verknüpfung der globalen gebührenfreien Rufnummer (IFN) mit einem von der Diensteinheit (SERV) bereitgestellten Dienst eingetragen wird.

9. Verfahren nach einem der Ansprüche 1 bis 8, **dadurch gekennzeichnet, daß** das rufende Endgerät (TE21) ein Mobilfunkendgerät darstellt, daß das zweite Kommunikationsnetz (KN2) das Heimat-Mobilfunknetz des Teilnehmers (A) des rufenden Endgeräts (TE21) umfaßt und daß das erste Kommunikationsnetz (KN1) das Besuchs-Mobilfunknetz dieses Teilnehmers (A) umfaßt.

10. Diensteinheit (SERV) für den Aufbau einer gebührenfreien Kommunikationsverbindung zwischen einem rufenden Endgerät (TE21), das mit einem ersten Kommunikationsnetz (KN1) in Verbindung steht, und einem gerufenen Endgerät,
wobei die Diensteinheit (SERV) in einem zweiten Kommunikationsnetz (KN2) angeordnet ist, **dadurch gekennzeichnet, daß** die Diensteinheit (SERV) mit einer Empfangseinheit (KOM) zum Empfang einer Anfrage aus dem ersten Kommunikationsnetz (KN1) mit einer globalen gebührenfreien Rufnummer (IFN) versehen ist, daß die Diensteinheit (SERV) mit einer Steuereinheit (CONTR) zum Ermitteln einer lokalen gebührenfreien Rufnummer (LFN) des ersten Kommunikationsnetzes (KN1) aus der globalen gebührenfreien Rufnummer (IFN) versehen ist und daß die Diensteinheit (SERV) mit einer Sendeeinheit (KOM) zum Rückmelden der ermittelten lokalen gebührenfreien Rufnummer (LFN) an das erste Kommunikationsnetzes (KN1) versehen ist.

11. Diensteinheit nach Anspruch 10, **dadurch gekennzeichnet, daß** die Diensteinheit (SERV) eine IN Diensteinheit ist.

12. Vermittlungsstelle (EX2) eines ersten Kommunikationsnetzes (KN1) mit Mitteln zum Empfang einer Verbindungsanforderung mit einer globalen gebührenfreien Rufnummer (IFN) als gerufene Rufnummer,
mit Mitteln, die so ausgestaltet sind, daß sie die Verbindungsanforderung als eine Verbindungsanforderung mit globaler gebührenfreier gerufener Rufnummer (IFN) erkennen und eine Anfrage an eine Diensteinheit (SERV) eines zweiten Kommunikationsnetzes (KN2) senden, mittels der diese globale gebührenfreie Rufnummer (IFN) bereitgestellt wird, **dadurch gekennzeichnet, daß** die Vermittlungsstelle (EX2) mit Mitteln zum Empfang ) einer von der Diensteinheit (SERV) rückgemeldeten lokalen gebührenfreien Rufnummer (LFN) versehen ist und daß die Vermittlungsstelle (EX2) mit Mitteln zur Steuerung des Aufbaus der angeforderten Verbindung durch das erste Kommunikationsnetz (KN1) gemäß dieser lokalen gebührenfreien Rufnummer (LFN) versehen ist.

13. Kommunikationsnetz (KN1) mit Mitteln zum Empfang einer Verbindungsanforderung mit einer globalen gebührenfreien Rufnummer (IFN) als gerufene Rufnummer,
mit Mitteln, die so ausgestaltet sind, daß sie die Verbindungsanforderung als eine Verbindungsanforderung mit globaler gebührenfreier gerufener Rufnummer (IFN) erkennen und eine Anfrage an eine Diensteinheit (SERV) eines zweiten Kommunikationsnetzes (KN2) senden, mittels der diese globale gebührenfreie Rufnummer bereitgestellt wird, **dadurch gekennzeichnet, daß** das Kommunikationsnetz (KN1) mit Mitteln zum Empfang einer von der Diensteinheit (SERV) rückgemeldeten lokalen gebührenfreien Rufnummer (LFN) versehen ist und daß das Kommunikationsnetz (KN1) mit Mitteln zur Steuerung des Aufbaus der angeforderten Verbindung durch das Kommunikationsnetz (KN1) gemäß dieser lokalen gebührenfreien Rufnummer (LFN) versehen ist.

## Claims

1. Method for setting up a toll-free communications connection between a calling terminal device (TE21) that is connected to a first communications network (KN1) and a called terminal device, wherein, in the method, the calling terminal device (TE21) transmits, to set up the connection, a connection request with a global toll-free directory number (IFN) as called directory number to the first communications network (KN1), and wherein the global toll-free directory number (IFN) is made available by means of a service unit (SERV) of a second communications network (KN2), **characterized in that** the connection request is recognized as a connection request with a global toll-free called directory number and a request is transmitted by the first communications network (KN1) to said service unit (SERV) of the second communications network (KN2), **in that** the service unit (SERV) places a local toll-free directory number (LFN) of the first communicaticns network (KN1) from the global toll-free directory number (IFN) and signals it back to the first communications network (KN1) and **in that** the requested connection is set up by the first communications network (KN1) in accordance with said traced local toll-free directory number (LFN).

2. Method according to Claim 1, **characterized in that** the traced local toll-free directory number (LFN) is entered in the connection request as called directory number and the connection request is routed in accordance with said directory number to a control unit (PREE_SERV), responsible for the control of toll-free connections, of the first communications network (KN1).

3. Method according to either of Claims 1 or 2, **characterized in that** an indicator (NID) of the requesting communications network is transmitted with the request to the service unit (SERV) and **in that** the service unit (SERV) traces the local toll-free directory number (LFN) from the global toll-free directory number (IFN) depending on the indicator (NID) of the requesting communications network.

4. Method according to any of Claims 1 to 3, **characterized in that** an indicator (SID) of the calling terminal device or of the subscriber (A) assigned to the calling terminal device is transmitted with the request to the service unit (SERV) by the first communications network (KN1) and **in that** the service unit (SERV) traces the local toll-free directory number (LFN) from the global toll-free directory number (IFN) depending on the indicator (SID) of the calling terminal device or of the subscriber (A) assigned to the calling terminal device.

5. Method according to any of Claims 1 to 4, **characterized in that** the global toll-free directory number (IFN) is recognized in the first communications network (KN1) by means of a profile (SUB_DAT) assigned to the calling terminal device or its subscriber (A).

6. Method according to Claim 5, **characterized in that** the profile (SUB_DAT) is loaded by the second communications network (KN2) into the first communications network (KN1).

7. Method according to Claim 6, **characterized in that** the profile (SUB_DAT) is loaded if, for the purpose of logging on in the first communications network (KN1), the calling terminal device (TE21) makes contact with the latter.

8. Method according to any of Claims 5 to 7, **characterized in that** a combination of the global toll-free directory number (IFN) with a service provided by the service unit (SERV) is entered in the profile (SUB_DAT).

9. Method according to any of Claims 1 to 8, **characterized in that** the calling terminal device (TE21) is a mobile-radio terminal device, **in that** the second communications network (KN2) comprises the home mobile-radio network of the subscriber (A) of the calling terminal device (TE21) and **in that** the first communications network (KN1) comprises the visitor mobile-radio network of said subscriber (A).

10. Service unit (SERV) for setting up a toll-free communications connection between a calling terminal device (TE21) that is connected to a first communications network (KN1) and a called terminal device, wherein the service unit (SERV) is disposed in a second communications network (KN2), **characterized in that** the service unit (SERV) is provided with a receiving unit (KOM) for receiving a request from the first communications network (KN1) with a global toll-free directory number (IFN), **in that** the service unit (SERV) is provided with a control unit (CONTR) for tracing a local toll-free directory number (LFN) of the first communications network (KN1) from the global toll-free directory number (IFN) and **in that** the service unit (SERV) is provided with a transmitting unit (KOM) for signalling back the traced local toll-free directory number (LFN) to the first communications network (KN1).

11. Service unit according to Claim 10, **characterized in that** the service unit (SERV) is an IN service unit.

12. Exchange (EX2) of a first communications network (KN1) having means for receiving a connection request with a global toll-free directory number (IFN) as called directory number, and having means that are configured in such a way that they recognize the connection request as a connection request with a global toll-free called directory number (IFN) and transmit a request to a service unit (SERV) of a second communications network (KN2) by means of which said global toll-free directory number (IFN) is made available, **characterized in that** the exchange (EX2) is provided with means for receiving a local toll-free directory number (LFN) signalled back by the service unit (SERV) and **in that** the exchange (EX2) is provided with means for controlling the setting up of the received connection by the first communications network (KN1) in accordance with said local toll-free directory number (LFN).

13. Communications network (KN1) having means for receiving a connection request with a global toll-free directory number (IFN) as called directory number and having means that are configured in such a way that they recognize the connection request as a connection request with a global toll-free called directory number (IFN) and transmit a request to a service unit (SERV) of a second communications network (KN2) by means of which said global toll-free directory number is made available, **characterized in that** the communications network (KN1) is provided with means for receiving a local toll-free directory number (LFN) signalled back by the service unit (SERV) and **in that** the communications network (KN1) is provided with means for controlling the setting up of the requested connection by the communications network (KN1) in accordance with said local toll-free directory number (LFN).

## Revendications

1. Procédé pour établir une liaison de télécommunications non payante entre un terminal appelant (TE21), qui est en liaison avec un premier réseau de télécommunications (KN1), et un terminal appelé, le terminal appelant (TE21) émettant vers le premier réseau de télécommunications (KN1), dans le cadre du procédé, pour l'établissement de la liaison, une demande de liaison avec un numéro d'appel global non payant (IFN) en tant que numéro d'appel appelé, et le numéro d'appel global non payant (IFN) étant mis à disposition au moyen d'une unité de service (SERV) d'un second réseau de télécommunications (KN2),
**caractérisé en ce que** la demande de liaison est reconnue comme étant une demande de liaison avec numéro d'appel global non payant, et le premier réseau de télécommunications (KN1) émet un appel à cette unité de service (SERV) du second réseau de télécommunications (KN2), **en ce que** l'unité de service (SERV) détermine à partir du numéro d'appel global non payant (IFN), un numéro d'appel local non payant (LFN) du premier réseau de télécommunications (KN1) et transmet celui-ci en retour au premier réseau de télécommunications (KN1), et **en ce que** la liaison demandée est établie par le premier réseau de télécommunications (KN1) conformément à ce numéro d'appel local non payant (LFN).

2. Procédé selon la revendication 1, **caractérisé en ce que** le numéro d'appel local non payant (LFN) déterminé est introduit dans la demande de liaison en tant que numéro d'appel appelé, et la demande de liaison est dirigée, conformément à ce numéro d'appel vers une unité de commande (FREE_SERV) du premier réseau de télécommunications (KN1), compétente pour commander des liaisons non payantes.

3. Procédé selon l'une des revendications 1 à 2, **caractérisé en ce qu'**avec la demande est émise une identification ou indicatif (NID) du réseau de télécommunications demandeur, à l'unité de service (SERV), et **en ce que** l'unité de service (SERV) détermine à partir du numéro d'appel global non payant (IFN), le numéro d'appel local non payant (LFN) en fonction de l'identification (NID) du réseau de télécommunications demandeur.

4. Procédé selon l'une des revendications 1 à 3, **caractérisé en ce qu'**avec la demande, une identification (SID) du terminal appelant ou de l'abonné (A) affecté au terminal appelant est émise du premier réseau de télécommunications (KN1) à l'unité de service (SERV), et **en ce que** l'unité de service (SERV) détermine à partir du numéro d'appel global non payant (IFN), le numéro d'appel local non payant (LFN) en fonction de l'identification (SID) du terminal appelant ou de l'abonné (A) affecté au terminal appelant.

5. Procédé selon l'une des revendications 1 à 4, **caractérisé en ce que** le numéro d'appel global non payant (IFN) est reconnu dans le premier réseau de télécommunications (KN1) au moyen d'un profil (SUB_DAT) associé au terminal appelant ou à son abonné (A).

6. Procédé selon la revendication 5, **caractérisé en ce que** le profil (SUB_DAT) est chargé par le second réseau de télécommunications (KN2) dans le premier réseau de télécommunications (KN1).

7. Procédé selon la revendication 6, **caractérisé en ce que** le chargement du profil (SUB_DAT) est effectué lorsque le terminal appelant (TE21), pour la demande dans le premier réseau de télécommunications (KN1), entre en liaison avec celui-ci.

8. Procédé selon l'une des revendications 5 à 7, **caractérisé en ce que** dans le profil (SUB_DAT) est introduit une combinaison du numéro d'appel global non payant (IFN) avec un service fourni par l'unité de service (SERV).

9. Procédé selon l'une des revendications 1 à 8, **caractérisé en ce que** le terminal appelant (TE21) représente un terminal mobile de radiocommunications, **en ce que** le second réseau de télécommunications (KN2) englobe le réseau de radiocommunications mobiles d'attache de l'abonné (A) du terminal appelant (TE21), et **en ce que** le premier réseau de télécommunications (KN1) englobe le réseau de radiocommunications mobiles hôte de cet abonné (A).

10. Unité de service (SERV) pour l'établissement d'une liaison de télécommunications non payante entre un terminal appelant (TE21), qui est en liaison avec un premier réseau de télécommunications (KN1), et un terminal appelé, l'unité de service (SERV) étant disposée dans un second réseau de télécommunications (KN2), **caractérisée en ce que** l'unité de service (SERV) est pourvue d'une unité de réception (KOM) destinée à la réception d'une demande issue du premier réseau de télécommunications (KN1) avec un numéro d'appel global non payant (IFN), **en ce que** l'unité de service (SERV) est pourvue d'une unité de commande (CONTR) destinée à déterminer un numéro d'appel local non payant (LFN) du premier réseau de télécommunications (KN1) à partir du numéro d'appel global non payant (IFN), et **en ce que** l'unité de service (SERV) est pourvue d'une unité d'émission (KOM) destinée à transmettre en retour le numéro d'appel local non payant (LFN) déterminé, au premier réseau de télécommunications (KN1).

11. Unité de service selon la revendication 10, **caractérisée en ce que** l'unité de service (SERV) est une unité de service IN (Intelligent Network).

12. Central d'opérations (EX2) d'un premier réseau de télécommunications (KN1) comprenant des moyens destinés à la réception d'une demande de liaison avec un numéro d'appel global non payant (IFN) en tant que numéro d'appel appelé, comprenant également des moyens qui sont conçus de manière à reconnaître la demande de liaison comme étant une demande de liaison avec un numéro d'appel global non payant (IFN) appelé, et à émettre une demande à une unité de service (SERV) d'un second réseau de télécommunications (KN2), à l'aide de laquelle ce numéro d'appel global non payant (IFN) est mis à disposition, **caractérisé en ce que** le central d'opérations (EX2) est pourvu de moyens destinés à la réception d'un numéro d'appel local non payant (LFN) retransmis en retour par l'unité de service (SERV), et **en ce que** le central d'opérations (EX2) est muni de moyens destinés à commander l'établissement de la liaison demandée par le premier réseau de télécommunications (KN1) conformément à ce numéro d'appel local non payant (LFN).

13. Réseau de télécommunications (KN1) comprenant des moyens destinés à la réception d'une demande de liaison avec un numéro d'appel global non payant (IFN) en tant que numéro appelé, comprenant également des moyens qui sont conçus de manière à reconnaître la demande de liaison comme étant une demande de liaison avec un numéro d'appel global non payant (IFN) appelé et à émettre une demande à une unité de service (SERV) d'un second réseau de télécommunications (KN2), à l'aide de laquelle ce numéro d'appel global non payant (IFN) est mis à disposition, **caractérisé en ce que** le réseau de télécommunications (KN1) est pourvu de moyens destinés à la réception d'un numéro d'appel local non payant (LFN) retransmis en retour par l'unité de service (SERV), et **en ce que** le réseau de télécommunications (KN1) est muni de moyens destinés à commander l'établissement de la liaison demandée par le réseau de télécommunications (KN1) conformément à ce numéro d'appel local non payant (LFN).
